# EUROPEAN PATENT SPECIFICATION

(11) **EP 0 412 208 B1**
(45) Date of publication and mention of the grant of the patent: **05.04.1995**
(21) Application number: 89123664.8
(22) Date of filing: 21.12.1989
(51) Int. Cl.: F16L 13/00, F16L 13/08

(54) **Pipe coupling**
Rohrverbindung
Raccord de tuyau

(30) Priority: 14.07.1989 JP 82143/89
(43) Date of publication of application: 13.02.1991
(73) Proprietor: NKK CORPORATION, Tokyo (JP)
(72) Inventor: Hagio, Akira c/o Patent & License Dept. NKK Corp., Chiyoda-ku Tokyo (JP); Ono, Yoshimi c/o Patent & License Dept. NKK Corp., Chiyoda-ku Tokyo (JP); Honma, Hiroshi c/o Patent & License Dept. NKK Cor, Chiyoda-ku Tokyo (JP)
(74) Representative: Füchsle, Klaus, Dipl.-Ing.

(56) References cited:
- DE-A- 2 448 160
- DE-A- 2 823 003
- DE-A- 2 849 057
- DE-A- 2 901 536
- GB-A- 1 518 788
- US-A- 2 174 218
- US-A- 4 197 880

## Description

The present invention relates to a pipe coupling fabricated of shape memory alloy.

A pipe coupling fabricated of shape memory alloy is disclosed in a Japanese Examined Patent Publication No.4898/79. A plurality of ring protrusions are installed on an internal clamping surface of a cylindrical coupling member of the coupling. Ends of a pipe to be joined to the pipe coupling are inserted into the pipe coupling from both sides of the coupling member. The coupling member contracts in the radial direction by raising a temperature of the coupling member, into which the ends of the pipe have been inserted, to its transition temperature or more and the ring protrusions bite into an external surface of the pipe to be joined to the coupling. In this way, the ends of the pipes are joined to each other.

However, when a pipe is in the following state, a pipe coupling is hard to seal reliably.
a) When the pipe has surface flaws, especially, surface flaws in the axial direction of the pipe.
b) When a seam weld pipe has a small weld reinforcement of a bead and a shape of its toe is not smooth.
c) When a roundness of the pipe is not good.
d) When a tolerance of an outer diameter is large.
Particularly, when a ratio of a wall thickness "t" to a diameter "D" of the pipe is large, a reliable seal property is hard to obtain.

In the above-mentioned case, in order that the ring protrusions can bite well into the external surface of the pipe, it is thought that the shape of the ring protrusion should be made to be an acute angle or that a radius of curvature of the pipe should be made small. However, even when a hardnes of a material of the coupling member is equal to a hardness of the pipe to be joined or slightly over the hardness of the pipe, the ring protrusions themselves are deformed. Consequently, the ring protrusions cannot bite into the external surface of the pipe in order to raise the seal property.

A further prior art is that of GB-A-1 518 788 in which a heat-recoverable pipe coupling is disclosed comprising an outer heat shrinkable cylindrical metal sleeve formed on its inner surface with a plurality of ring-shaped protrusions. Within this metal sleeve is a tubular liner extending along the whole length of the sleeve such that said ring-shaped protrusions press against the outer surface of said liner and hold it in position, said liner effecting a seal when pipe ends are inserted into opposite ends of said tubular liner and the coupling is heated to shrink it onto said liner and said pipe ends.

DE-A-2 901 536 discloses a tubular metal memory coupling member having a plurality of ring-shaped protrusions formed on its inner surface.

Finally DE-A-2 448 160 discloses the embodiment of GB-A-1 518 788 that is already described above and also a further example in which the tubular liner is formed with axially extending slits; and a yet further example in which the cross-section of the liner is C-shaped.

It is an object of the invention to provide a pipe coupling that can overcome the aforesaid difficulties in ensuring a good seal property.

### SUMMARY OF THE INVENTION

The invention is as defined in the accompanying claims, Claim 1 of which has been divided into a two-part form based on the assumption that either GB-A-1 518 788 or DE-A-2 448 160 are the nearest states of the art.

The invention in its widest form is a pipe coupling that comprises; a cylindrical coupling member fabricated of a shape memory alloy; said cylindrical coupling member having one or more ring-shaped protrusions formed on an internal surface of said cylindrical coupling member; and in that on each side of each ring-shaped protrusion there is a metallic member installed on said internal surface of said cylindrical coupling member said metallic members having a melting point lower than that of said cylindrical coupling member.

Furthermore, the pipe coupling may comprise:
a ring-shaped protrusion or stopper formed at a central portion of said cylindrical coupling member in the axial direction thereof;
said metallic members being attached one to one side of said ring-shaped stopper, and the other to the other side of said ring-shaped stopper.

The objects and advantages of the present invention will become apparent from the detailed description which follows, taken in conjunction with the appended drawings.
Fig. 1 is a vertical sectional view of a first pipe coupling of the present invention;
Fig. 2 is a vertical sectional view of the pipe coupling taken on line 1-1 of Fig. 1; and
Fig. 3 is a vertical sectional view of a second pipe coupling of the present inventiion.

A Preferred Embodiment of the present invention in the case of pipe ends of stainless steel of SUS 304 which are to be joined to each other by inserting the pipe ends into a coupling member will be described with specific reference to the appended drawings.

The coupling member to be used is fabricated of shape memory alloy of stainless steel. Components of said alloy are 9 wt.% Cr, 14 wt.% Mn, 6 wt.% Si and 5 wt.% Ni and the rest of the components is Fe. A suitable temperature of heating for causing the coupling member to contract in the radial direction thereof is 300 to 350 °C. Metallic members of low melting point are attached to an internal surface of the coupling member, said metallic members having a melting point that is lower than that of materials of a pipe to be joined; and of materials of the coupling member. A soft solder of Ag-Sn is used as metal of low melting point. 3 to 5 wt.% Ag is desired to be contained in the soft solder and the rest of the components is desired to be Sn. A melting point of the soft solder is 200 to 250°C. A soft solder of Ag-Sn-Sb also is used.

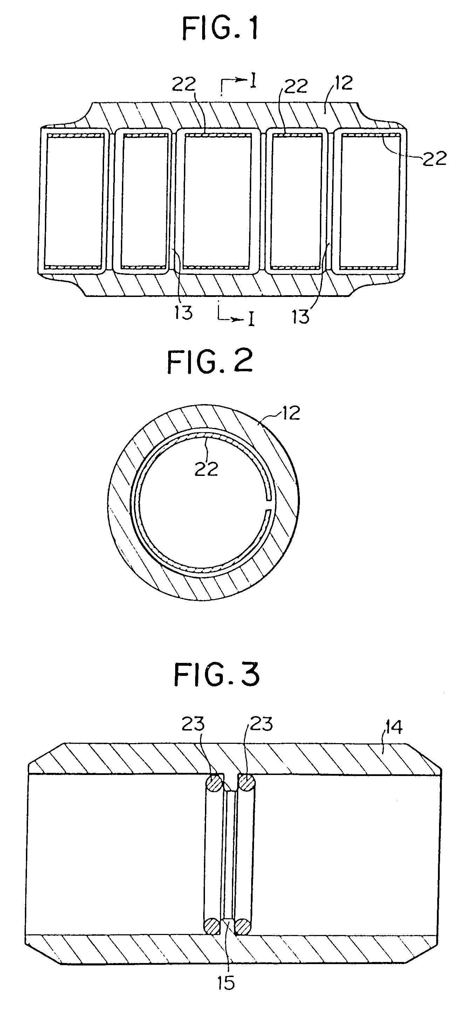

Fig. 1 is a first pipe coupling of the present invention. Four ring protrusions 13 are formed in the axial direction of cylindrical coupling member 12. The ring protrusions 13 are positioned symmetrially relative to the center of a coupling. Metallic members 22 of low melting point are fixed to an internal surface between the ring protrusions 13 and an internal surface of both ends of the coupling member 12. A section of the metallic member 22 of low melting point has a shape of "C" as shown in Fig. 2 and has slits in the axial direction. The coupling member 12, into which the pipe has been inserted, contracts in the radial direction on being heated. The metallic members of low melting point are melted by heating and molten metal penetrates into the voids between the pipe and the coupling member. Molten metal penetrates into portions, into which the ring protrusions have not been able to bite, whereby said portion can be reliably sealed. For example, a portion where there is a flaw in the axial direction can be reliably sealed.

Fig. 3 is a vertical sectional view of a second pipe coupling of the present invention, In this pipe coupling, difficulties in pipe couplings as shown in Figs. 1 and 2 are overcome. That is, the problem is solved that, when pipes to be joined from both sides of a coupling member are inserted into the coupling member, the ends of the pipes are hard to adjust to a central portion of the coupling member. Ring stopper 15 is formed at a central portion of the cylindrical coupling member 14 in the axial direction. Ring metallic members 23 of low melting point are attached to both sides of the stopper 15. The coupling member 14, into which the pipes have been inserted, contracts in the radial direction thereof on being heated. The metallic members 23 of low melting point are melted by heating and molten metal penetrates into the voids between the pipe and the coupling member. Even when small voids remain between the pipe and the coupling member because the pipe to be joined is not truly round, molten metal penetrates into the voids. In consequence, a joint portion can be reliably sealed by a solidification of the molten metal.

The pipe coupling of the present invention as described above can be applied to a pipe to be joined which is not truly round or has flaws in the axial direction. When the pipes are joined by heating the pipe coupling and causing a diameter of the coupling member to contract, the metallic members of low melting point attached to the internal surface of the coupling member are melted and molten metal penetrates into the voids between the pipe and the coupling member thanks to a capillary phenomenon. Penetrated molten metal is solidified by cooling whereby a joint portion can be reliably sealed.

Reference signs in the claims are intended for better understanding and shall not limit the scope.

## Claims

1. A pipe coupling comprising:
a cylindrical coupling member (12, 14) fabricated of a shape memory alloy;
said cylindrical coupling member (12, 14) having one or more ring-shaped protrusions (13, 15) formed on an internal surface of said cylindrical coupling member;
**characterized in that**;
on each side of each ring-shaped protrusion (13, 15) there is a metallic member (22, 23) installed on said internal surface of said cylindrical coupling member (12, 14);
said metallic members (22, 23) having a melting point lower than that of said cylindrical coupling member (12, 14).

2. A pipe coupling according to Claim 1 wherein there are four of said ring-shaped protrusions (13) positioned symmetrically relative to the center of the cylindrical coupling member (12) in the direction of the coupling member.

3. A pipe coupling according to Claim 1 or Claim 2 and wherein the metallic member or members (22) that are positioned between two ring-shaped protrusions (13) each has slits and a cross section that is C-shaped.

4. A pipe coupling according to Claim 3 and wherein said slits extend axially.

5. A pipe coupling according to Claim 1 wherein there is a ring-shaped protrusion or stopper (15) formed at a central portion of said coupling member (14) in the axial direction thereof; said metallic members (23) on each side thereof being attached one to one side of said ring-shaped protrusion or stopper (15), and the other being attached to the other side of said ring-shaped protrusion or stopper.

6. The pipe coupling of any one of Claims 1 to 5, wherein said shape memory alloy is a shape memory alloy of stainless steel.

7. The pipe coupling of any one of Claim 1 to 6, wherein said metallic member (22, 23) is a soft solder of AG-Sn.

8. The pipe coupling of any one of Claims 1 to 6, wherein said metallic member (22, 23) is a soft solder of AG-Sn-Sb.

9. The pipe coupling oOf any one of Claims 1 to 5, wherein said shape memory alloy is a shape memory alloy of stainless steel; and
said metallic member (22, 23) is a soft solder of Ag-Sn.

## Patentansprüche

1. Eine Rohrverbindung, umfassend:
ein aus einer Memorylegierung hergestelltes zylindrisches Kupplungsteil (12, 14);
das zylindrische Kupplungsteil (12, 14) versehen mit ein oder mehreren ringförmigen Vorsprüngen (13, 15), die auf einer Innenfläche des zylindrischen Kupplungsteils ausgebildet sind, **dadurch gekennzeichnet,** daß auf jeder Seite jedes ringförmigen Vorsprungs (13, 15) ein metallisches Bauteil (22, 23) auf der Innenfläche des zylindrischen Kupplungsteils (12, 13) angebracht ist;
wobei die metallischen Bauteile (22, 23) einen Schmelzpunkt besitzen, der geringer ist als der des zylindrischen Kupplungsteils (12, 14).

2. Eine Rohrverbindung nach Anspruch 1, worin vier der ringförmigen Vorsprünge (13) symmetrisch relativ zu der Mitte des zylindrischen Kupplungsteils (12) in der Richtung des Kupplungsteils positioniert sind.

3. Ein Rohrverbindung nach Anspruch 1 oder 2, worin das metallische Bauteil oder Bauteile (22), die zwischen zwei ringförmigen Vorsprüngen (13) positioniert sind, jeweils Schlitze und einen C-förmigen Querschnitt besitzen.

4. Eine Rohrverbindung nach Anspruch 3, worin sich die Schlitze axial erstrecken.

5. Eine Rohrverbindung nach Anspruch 1, worin ein ringförmiger Vorsprung oder Anschlag (15) an einem Zentralabschnitt des Kupplungsteils (14) in dessen axialer Richtung ausgebildet ist; eines der metallischen Bauteile (23) auf jeder Seite des Anschlags (15) befestigt auf einer Seite des ringförmigen Vorsprungs oder Anschlags (15) und das andere befestigt an der anderen Seite des ringförmigen Vorsprungs oder Anschlags.

6. Rohrverbindung nach einem der beliebigen der Ansprüche 1 bis 5, worin die Memorylegierung eine Memorylegierung aus rostfreiem Stahl ist.

7. Rohrverbindung nach einem beliebigen der Ansprüche 1 bis 6, worin das metallische Bauteil (22, 23) ein Weichlot aus Ag-Sn ist.

8. Rohrverbindung nach einem beliebigen der Ansprüche 1 bis 6, worin das metallische Bauteil (22, 23) ein Weichlot aus Ag-Sn-Sb ist.

9. Rohrverbindung nach einem beliebigen der Ansprüche 1 bis 5, worin die Memorylegierung eine Memorylegierung aus rostfreiem Stahl und das metallische Bauteil (22, 23) ein Weichlot aus Ag-Sn ist.

## Revendications

1. Raccord pour tuyau comprenant:
un élément cylindrique de raccordement (12, 14) fabriqué en un alliage à mémoire de forme;
ledit élément cylindrique de raccordement (12, 14) possédant une ou plusieurs saillies annulaires (13, 15) formées sur une surface interne de l'élément cylindrique de raccordement;
caractérisé en ce que;
de part et d'autre de chaque saillie annulaire (13, 15) se trouve un élément métallique (22, 23) installé sur la surface interne de l'élément cylindrique de raccordement (12, 14);
lesdits éléments métalliques (22, 23) ayant un point de fusion inférieur à celui de l'élément cylindrique de raccordement (12, 14).

2. Raccord pour tuyau selon la revendication 1, dans lequel il y a quatre saillies annulaires (13) disposées symétriquement par rapport au centre de l'élément cylindrique de raccordement (12) dans la direction de l'élément de raccordement.

3. Raccord pour tuyau selon la revendication 1 ou la revendication 2, dans lequel l'élément ou les éléments métalliques (22) qui sont disposés entre deux saillies annulaires (13) possèdent chacun des fentes et une section transversale en C.

4. Raccord pour tuyau selon la revendication 3, dans lequel les fentes s'étendent axialement.

5. Raccord pour tuyau selon la revendication 1, dans lequel il existe une saillie ou butée annulaire (15) formée dans une partie centrale dudit élément de raccord (14), dans sa direction axiale; lesdits éléments métalliques (23) de part et d'autre de celle-ci étant fixés l'un d'un côté de la saillie ou butée annulaire (15), et l'autre étant fixé de l'autre côté de la saillie ou butée annulaire.

6. Raccord pour tuyau selon l'une quelconque des revendications 1 à 5, dans lequel ledit alliage à mémoire de forme est un alliage à mémoire de forme en acier inoxydable.

7. Raccord pour tuyau selon l'une quelconque des revendications 1 à 6, dans lequel l'élément métallique (22, 23) est une soudure tendre en Ag-Sn.

8. Raccord pour tuyau selon l'une quelconque des revendications 1 à 6, dans lequel l'élément métallique (22, 23) est une soudure tendre en Ag-Sn-Sb.

9. Raccord pour tuyau selon l'une quelconque des revendications 1 à 5, dans lequel l'alliage à mémoire de forme est un alliage à mémoire de forme en acier inoxydable; et
ledit élément métallique (22, 23) est une soudure tendre en Ag-Sn.
